(19) Europäisches Patentamt

European Patent Office

Office européen des brevets

(11) **EP 0 853 213 A2**

(12) **EUROPÄISCHE PATENTANMELDUNG**

(43) Veröffentlichungstag:
   **15.07.1998 Patentblatt 1998/29**

(51) Int. Cl.⁶: **F16P 3/00**

(21) Anmeldenummer: **98100189.4**

(22) Anmeldetag: **08.01.1998**

(84) Benannte Vertragsstaaten:
   **AT BE CH DE DK ES FI FR GB GR IE IT LI LU MC NL PT SE**
   Benannte Erstreckungsstaaten:
   **AL LT LV MK RO SI**

(30) Priorität: **14.01.1997 DE 19700898**

(71) Anmelder:
   **Elan Schaltelemente GmbH**
   **D-35435 Wettenberg (DE)**

(72) Erfinder:
   • **Kramer, Manfred**
     **35396 Giessen (DE)**
   • **Blöcher, Michael**
     **35418 Buseck (DE)**
   • **Rühl, Thomas**
     **35584 Wetzlar (DE)**

(74) Vertreter:
   **Stoffregen, Hans-Herbert, Dr. Dipl.-Phys.**
   **Patentanwalt**
   **Postfach 21 44**
   **63411 Hanau (DE)**

(54) **Schaltungsanordnung für eine Schutzeinrichtung**

(57)   Die Erfindung bezieht sich auf eine Schaltungsanordnung mit Relais und zumindest einem Schaltelement, insbesondere für Schutzeinrichtungen wie Zweihandschaltungen, Not-Aus-Schaltungen oder Türverriegelungen. Um einen kompakten und preiswerten Aufbau zu ermöglichen, dass die Schaltungsanordnung zumindest einen Kondensator (62, 64, 248, 250) aufweist, wobei ein erster Anschluss des Kondensators einerseits über zumindest ein stromrichtungsabhängiges aktives oder passives Bauelement (48, 236) mit einem ersten Pol der Spannungsquelle verbunden und über einen ersten Schaltkontakt (18, 210) mit einem zweiten Pol der Spannungsquelle verbindbar ist und andererseits mit einer Reihenschaltung aus einem stromrichtungsabhängigen aktiven oder passiven Bauelement (68, 254) und erstem Relais (38, 226) verbunden ist, wobei ein Anschluss des ersten Relais (38, 226) mit dem ersten Pol der Spannungsquelle verbunden und über den ersten Schaltkontakt (18, 210) mit dem zweiten Pol der Spannungsquelle verbindbar ist und dass ein zweiter Anschluss des Kondensators einerseits über ein stromrichtungsabhängiges aktives oder passives Bauelement (72, 258) mit dem zweiten Pol der Spannungsquelle verbunden und über einen zweiten Schaltkontakt (22, 212) mit dem ersten Pol der Spannungsquelle verbindbar ist und dass der zweite Anschluss des Kondensators andererseits mit einem zweiten Relais (36, 224) verbunden ist, wobei ein Anschluss des zweiten Relais (36, 224) mit dem zweiten Pol der Spannungsquelle verbunden und über den zweiten Schaltkontakt (22, 212) mit dem ersten Pol der Spannungsquelle verbindbar ist, so dass beim Schließen eines der Schaltkontakte (18, 22; 210, 12) sich der Kondensator (62, 64; 248, 250) über eine Reihenschaltung der Relais (38, 36; 226, 224) entlädt und dass beim gleichzeitigen oder im wesentlichen gleichzeitigen Schließen beider Schaltkontakte (18, 22; 210, 212) die Relais (38, 36; 226, 224) während ihrer Ansprechzeit parallel zum Kondensator und nach dem Anziehen der Relais an Betriebsspannung liegen.

Fig. 1

**Beschreibung**

Die Erfindung bezieht sich auf eine Schaltungsanordnung für eine Schutzeinrichtung wie Zweihandschaltung, Not-Aus-Schaltung oder Türverriegelung, mit zumindest einem Kondensator, der in Abhängigkeit der Stellung zumindest eines Schaltelementes entweder zur Aufladung an Betriebsspannung liegt oder zur Abgabe eines Stroms mit zumindest einem Relais in Reihe liegt.

Die dem Stand der Technik zu entnehmenden Schaltungsanordnungen für Zweihandschaltungen, Not-Aus-Schaltungen oder Türverriegelungen weisen üblicherweise Fünf- bzw. VierRelais auf. Eine aus der DE-A 30 28 196 A1 bekannte Zweihandschaltung für kraftbetriebene Pressen weist insgesamt vier Relais auf, von denen zwei als Hilfsrelais arbeiten, die den Schaltvorgang jeweils eines zweiten Relais vorbereiten. Davon sind zumeist zwei Relais als Arbeitsrelais und die restlichen als gesonderte Überwachungsrelais ausgebildet. Die gesonderten Überwachungsrelais verursachen zusätzliche Kosten und erschweren einen kompakten Aufbau der Schaltungsanordnung.

Der vorliegenden Erfindung liegt das Problem zugrunde, eine Schaltungsanordnung der vorher beschriebenen Art dahingehend weiterzubilden, dass diese kompakter und preiswerter aufgebaut werden kann. Ferner soll auch eine Verbesserung der Fehlerentdeckungsmaßnahmen erzielt werden.

Das Problem wird durch eine Schaltungsanordnung dadurch gelöst, dass ein erster Anschluss des zumindest einen Kondensators einerseits über zumindest ein stromrichtungsabhängiges Bauelement mit einem ersten Pol der Spannungsquelle verbunden und über einen ersten Schaltkontakt des Schaltelementes mit einem zweiten Pol der Spannungsquelle verbindbar ist und andererseits mit einer Reihenschaltung aus einem stromrichtungsabhängigen Bauelement und erstem Relais verbunden ist, wobei ein Anschluss des ersten Relais mit dem ersten Pol der Spannungsquelle verbunden und über den ersten Schaltkontakt des Schaltelementes mit dem zweiten Pol der Spannungsquelle verbindbar ist und dass ein zweiter Anschluss des zumindest einen Kondensators einerseits über ein stromrichtungsabhängiges aktives oder passives Bauelement mit dem zweiten Pol der Spannungsquelle verbunden und über einen zweiten Schaltkontakt mit dem ersten Pol der Spannungsquelle verbindbar ist und dass der zweite Anschluss des zumindest einen Kondensators andererseits mit einem zweiten Relais verbunden ist, wobei ein Anschluss des zweiten Relais mit dem zweiten Pol der Spannungsquelle verbunden und über den zweiten Schaltkontakt des Schaltelementes mit dem ersten Pol der Spannungsquelle verbindbar ist, so dass beim Schließen eines der Schaltkontakte sich der Kondensator über eine Reihenschaltung der Relais entlädt und dass beim gleichzeitigen oder im wesentlichen gleichzeitigen Schließen beider Schaltkontakte die Relais während ihrer Ansprechzeit parallel zum Kondensator und nach dem Anziehen der Relais an Betriebsspannung liegen.

Ein besonderer Vorteil dieser Schaltungsanordnung ist die Verwendung von nur zwei Schaltrelais. Insbesondere werden keine zusätzlichen Relais zur Überwachung der Schaltzustände benötigt. Dadurch wird ein kompakter und preiswerter Aufbau der Schaltungsanordnung ermöglicht. Das stromrichtungsabhängige passive Bauelement ist vorzugsweise als Diode ausgebildet. Alternativ können die Dioden auch durch den Leitbereich aktiver Bauelemente wie Transistoren ersetzt werden.

Es ist vorgesehen, dass in der Ladestrecke zumindest eines Kondensators Öffnerkontakte der Relais angeordnet sind. Durch diese Maßnahme wird sichergestellt, dass keine Aufladung des Kondensators ermöglicht wird, wenn eines der Relais mechanisch "kleben" geblieben ist. Somit wird auf einfache Weise eine Fehlererkennungsmaßnahme realisiert.

In einer bevorzugten Ausführungsform, zum Beispiel zur Realisierung einer Zweihandschaltung, weist die Schaltungsanordnung zwei Schaltelemente wie Tastschalter auf, wobei ein negativer Anschluss des ersten Relais über einen Öffnerkontakt eines ersten Tastschalters mit positiver und über ein Schließerkontakt des ersten Tastschalters mit negativer Betriebsspannung verbindbar ist und wobei ein positiver Anschluss des zweiten Relais über einen Öffnerkontakt eines zweiten Tastschalters mit negativer und über einen Schließerkontakt des zweiten Tastschalters mit positiver Betriebsspannung verbindbar ist.

Bei dieser Schaltungsanordnung werden in einer Schaltstellung, bei der die Tastschalter nicht betätigt sind, der oder die Kondensatoren aufgeladen. Während des Ladeprozesses der Kondensatoren sind die Relais in Bezug zum Ladestrom verpolt und werden somit nicht aktiviert. Erst wenn der negative Anschluss des ersten Relais und der positive Anschluss des zweiten Relais gleichzeitig oder im wesentlichen gleichzeitig an negative bzw. positive Betriebsspannung gelegt werden, liegen die Relais bezogen auf das Kondensatorpotential an Betriebsspannung und können somit aktiviert werden. Wird hingegen nur ein Tastschalter betätigt, d. h. dass sich nur die Polarität eines Relais ändert, kann sich der Kondensator über dieses Relais entladen. Da in dieser Schaltstellung das aus Kondensator und Widerstand bestehende R-C-Glied mit dem weiteren Relais in Reihe liegt, fällt an jedem Relais nur die halbe Betriebsspannung ab, was nicht zum Anziehen der Relais ausreicht.

Erst wenn beide Tastschalter innerhalb einer vorgebbaren Zeit, in der die Kondensatorspannung noch nicht unter den Spannungswert abgefallen ist, bei dem die Relais angezogen werden, betätigt werden, können die Relais anziehen, da an diesen in Bezug auf den Kondensator Betriebsspannung anliegt.

Ferner ist vorgesehen, dass die Selbsthaltekreise der Relais Schließerkontakte mit Tastschalter aufweisen. Damit ist sichergestellt, dass die Relais nur bei betätigten Tastschaltern angezogen bleiben. Wird zum Beispiel einer der Tastschalter losgelassen, so fallen dadurch beide Relais ab.

In einer bevorzugten Schaltungsanordnung ist zwischen dem Öffner- und Schließerkontakt der Tastschalter jeweils eine Sicherung angeordnet. Diese Sicherung löst zum Beispiel dann aus, wenn bei Betätigung eines Tastschalters dessen Öffnerkontakt nicht öffnet und durch Schließen des Schließerkontaktes ein Kurzschluss zwischen positiver und negativer Betriebsspannung entstehen würde.

Vorzugsweise kann die Schaltungsanordnung auch zur Realisierung einer Not-Aus-Sicherheitsschaltung eingesetzt werden. Dabei sind der erste Schaltkontakt und der zweite Schaltkontakt eines Not-Aus-Schalters zwei Öffnerkontakte, wobei der zumindest eine Kondensator in einem ersten Schaltzustand, bei dem der Not-Aus-Schalter betätigt ist, zur Aufladung an Betriebsspannung liegt und wobei in einem zweiten Schaltzustand, bei dem der Not-Aus-Schalter in Ruhestellung ist, der negative Anschluss des Relais über den ersten Öffnerkontakt mit negativer Betriebsspannung und der positive Anschluss des Relais über den zweiten Öffnerkontakt mit positiver Betriebsspannung verbunden ist. Auch hier werden lediglich zwei Relais eingesetzt, so dass ein kompakter und preiswerter Aufbau der Schaltungsanordnung gewährleistet ist.

Der Kondensator kann in diesem Fall nur geladen werden, wenn beide Relais vorher abgefallen sind. Erst durch gleichzeitiges bzw. nahezu gleichzeitiges Schließen der vorher geöffneten Öffnerkontakte kann bei aufgeladenem Kondensator ein Anziehen der Relais ermöglicht werden. Nachdem die Relais aktiviert sind, liegen die Öffnerkontake des Not-Aus-Tasters in dem Selbsthaltekreis der Relais. Durch Betätigen des Not-Aus-Tasters in diesem Schaltungszustand wird der Stromfluss durch die Relais unterbrochen, so dass diese abfallen und einen Betriebsstromkreis unterbrechen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in den Zeichnungen dargestellten bevorzugten Ausführungsbeispielen.

Es zeigen:

Fig. 1    ein Schaltbild einer Sicherheitsschaltung für Zweihandschaltungen mit zwei Tastschaltern und

Fig. 2    ein Schaltbild einer Sicherheitsschaltung mit einem Not-Aus-Schalter.

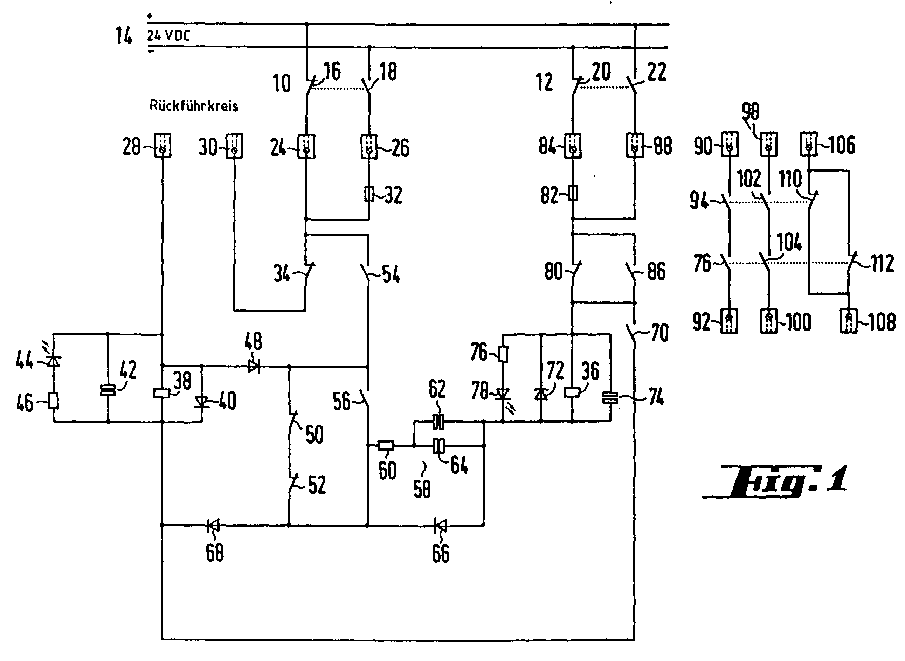

In Fig. 1 ist eine Sicherheitsschaltungsanordnung für Zweihandschaltungen dargestellt, die zu ihrer Betätigung mindestens die gleichzeitige Benutzung beider Hände erfordert, d. h. die Hände durch die erzeugte Ortsbindung aus dem Gefahrenbereich fernhält, um den Betrieb einer Maschine oder Anlage einzuleiten und aufrechtzuerhalten, solange eine Gefährdung besteht.

Die Schaltungsanordnung ist über Tastschalter 10, 12 mit einer Betriebsspannungsquelle 14 verbunden. Die Spannungsquelle 14 ist insbesondere eine Gleichspannungsquelle von 24 V. Bei der Gleichspannungsquelle 14 kann es sich um ein Netzgerät handeln, das die Netzspannung in zum Biespiel 24 V= umwandelt.

Die Tastschalter 10, 12 weisen jeweils einen Öffner 16, 20 und einen Schließerkontakt 18, 22 auf. Dabei werden Tastschalter 10, 12 eingesetzt, deren Öffner 16, 20 zuerst öffnen, bevor die Schließer 18, 22 schließen.

Ein Anschluss 24 der Sicherheitsschaltung ist über den Öffner 16 mit positiver Betriebsspannung verbunden. Ein Anschluss 26 der Schaltungsanordnung ist über den Schließer 18 mit negativer Betriebsspannung verbunden. Des Weiteren weist die Schaltungsanordnung Anschlüsse 28, 30 auf, die ausgangsseitig in der Regel über einen Öffnerkontakt einer zu bedienenden Maschine oder Anlage (nicht dargestellt) zur Bildung eines Rückführkreises verbunden sind.

Die Anschlüsse 24, 26 sind über eine Sicherung 32 miteinander verbunden. Der Anschluss 24 ist über einen Öffnerkontakt 34 und die über den nicht dargestellten Öffnerkontakt zwischen den Anschlüssen 28, 30 mit dem negativen Anschluss eines Relais 38 verbunden. Parallel zu dem Relais 38 ist eine Freilaufdiode 40, ein Kondensator 42 sowie eine Reihenschaltung aus Leuchtdiode 44 und Widerstand 46 angeordnet. Die Diode 48 liegt mit ihrer Anode an dem negativen Anschluss des Relais 38. Ferner ist der negative Anschluss des Relais 38 mit der Anode einer Diode 48 verbunden, deren Kathode mit einer Reihenschaltung von Öffnerkontakten 50, 52 des Relais 38 verbunden ist. Des Weiteren ist die Kathode der Diode 48 zum einen über einen Schließerkontakt 54 des Relais 38 mit dem Anschluss 24 und zum anderen über einen Schließerkontakt 56 des Relais 38 mit einem R-C-Glied 58 verbunden. Der Schließerkontakt 56 ist derart angeordnet, dass dieser parallel zu der Reihenschaltung der Öffnerkontakte 50, 52 des Relais 38 liegt.

Parallel zu dem R-C-Glied 58, das aus einer Reihenschaltung eines Widerstandes 60 und parallelliegenden Kondensatoren 62, 64 besteht, liegt eine Diode 66, die kathodenseitig mit dem Schließerkontakt 56, dem Öffnerkontakt 52 und der Anode einer Diode 68 verbunden ist. Die Diode 68 ist kathodenseitig mit dem positiven Anschluss des Relais 38 verbunden. Der positive Anschluss des Relais 38 ist über einen Schließer 70 des Relais 36 mit dem positiven Anschluss des Relais 36 verbunden. Der negative Anschluss des Relais 36 ist mit dem R-C-Glied 58 sowie dem Anodenanschluss der Diode 66 verbunden. Parallel zu dem, Relais 36 ist eine Freilaufdiode 72, ein Kondensator 74 sowie eine Reihenschaltung aus Widerstand 76 und Leuchtdiode 78 angeordnet. Die Diode 72 liegt mit ihrer Anode am negativen Anschluss des Relais 36.

Der positive Anschluss des Relais 36 ist über einen Öffnerkontakt 80 des Relais 36 und einer Sicherung 82 mit einem Anschluss 84 der Schaltungsanordnung verbunden. Der Anschluss 84 liegt über den Öffnerkontakt 20 des Tastschalters 12 an negativer Betriebsspannung. Parallel zu dem Öffnerkontakt 80 des Relais 36 ist ein Schließerkontakt 86 des Relais 38 angeordnet. An einer Verbindungsstelle zwischen dem Öffnerkontakt 80 und der Sicherung 82 ist ein Anschluss 88 der Schaltungsanordnung angebracht. Der Anschluss 88 ist über den Schließer 22 des Tastschalters 12 mit positiver Betriebsspannung verbunden.

Zwischen einem Anschluss 90 und einem Anschluss 92 ist eine Reihenschaltung aus einem Schließerkontakt 94 des Relais 38 und einem Schließerkontakt 96 des Relais 36 angeordnet. Des Weiteren ist zwischen einem Anschluss 98 und einem Anschluss 100 eine Reihenschaltung aus einem Schließerkontakt 102 des Relais 38 und einem Schließerkontakt 104 des Relais 36 angeordnet. Diese Schließerkontakte bilden eine Sicherheitsfreigabeschaltung. Ferner ist zwischen einem Anschluss 106 und einem Anschluss 108 ein Öffnerkontakt 110 des Relais 38 angeordnet. Parallel dazu liegt ein Öffnerkontakt 112 des Relais 36.

Die oben beschriebene Sicherheitsanordnung arbeitet wie folgt:

Nach angelegter Gleichspannung von 24 V=, nicht betätigten Tastschaltern 10, 12 an den Anschlüssen 24, 26 und 84, 88 sowie bei gebrückten Anschlüssen 28, 30 ist die Schaltungsanordnung betriebsbereit. In unbetätigtem Zustand der Tastschalter 10, 12 ist das R-C-Glied 58 über den Öffnerkontakt 16 des Tastschalters 10, den Öffnerkontakt 34, dem Rückführkreis (nicht dargestellt), die Diode 48, die Reihenschaltung der Öffnerkontakte 50, 52 mit dem Pluspol der Betriebsspannung verbunden. Über den Öffnerkontakt 20 des Tastschalters 12, die Sicherung 82, den Öffnerkontakt 80 sowie die Diode 72 ist das R-C-Glied 58 mit dem negativen Pol der Betriebsspannung verbunden. In diesem Betriebszustand fließt ein Ladestrom über das R-C-Glied 58, so dass die Kondensatoren 62,64 auf Betriebsspannung aufgeladen werden. Während des Ladeprozesses der Kondensatoren sind die Relais 36, 38 in Bezug zu dem Ladestrom verpolt, so dass diese nicht aktiviert werden.

Bei Betätigung nur eines der Tastschalter 10, 12, im Folgenden des Tastschalters 10, wird zunächst der Öffnerkontakt 16 geöffnet und anschließend der Schließerkontakt 18 geschlossen. In diesem Betriebszustand würden sich die Kondensatoren 62, 64 einerseits über den Widerstand 60, die Diode 68, das Relais 38, den Rückführkreis (nicht dargestellt), den Öffnerkontakt 34 und den geschlossenen Schließerkontakt 18 und andererseits über das Relais 36, den Öffnerkontakt 80, die Sicherung 84 und den Öffnerkontakt 20 entladen. Dabei fließt ein positiver Strom durch die Relais 36, 38. Da die Relais 36, 38 in dem Stromkreis jedoch in Reihe liegen, fällt an jedem Relais 36, 38 maximal nur die halbe Betriebsspannung ab, so dass die Relais 36, 38 nicht anziehen.

Die Kondensatoren 62, 64 werden sich entsprechend ihrer Entladekurve, die im wesentlichen durch die Zeitkonstante $T = R \times C$ im Entladekreis bestimmt ist, entladen. Die Zeitkonstante bestimmt sich aus dem ohmschen Widerstand des Entladekreises, die sich im wesentlichen aus dem Widerstand 60 und den ohmschen Widerständen der Relaisspulen 36, 38 zusammensetzt. Bei Betätigung beider Taster ergibt sich aufgrund der Parallelschaltung ein ohmscher Widerstand wie folgt

$$R = R_3 \text{ (Widerstand 60)} + \frac{\text{Ri (Relais 36) x Ri (Relais 38)}}{\text{Ri (Relais 36) + Ri (Relais 38)}}$$

Wird nun der zweite Tastschalter 12 innerhalb eines Zeitfensters betätigt, in dem sich die Kondensatoren 62, 64 noch nicht unter den Spannungswert entladen haben, welcher ein sicheres Anziehen der Relais 36, 38 gewährleistet, werden beide Relais 36, 38 aktiviert. In diesem Betriebszustand liegen die Relais 36, 38 in Bezug auf das Kondensatorpotential an Betriebsspannung, so dass diese anziehen können. Mit anderen Worten liegen die Relais 36, 38 aus Sicht der Kondensatoren 62, 64 parallel. Durch die Betätigung beider Tastschalter 10, 12 wird aus einer Reihenschaltung der Relais 36, 38, bei Betätigung nur eines Tastschalters 10, 12, eine Parallelschaltung. Dabei liegt der positive Anschluss des Relais 38 über die Diode 68 und den Widerstand 60 an dem positiven Pol der Kondensatoren 62, 64. Der negative Anschluss des Relais 38 liegt über den Rückführkreis, den Öffnerkontakt 34, die Sicherung 32 und den Schließerkontakt 18 an negativer Betriebsspannung.

Das Relais 36 ist mit seinem negativen Anschluss mit dem negativen Pol der Kondensatoren 62, 64 verbunden. Mit seinem positiven Anschluss ist das Relais 36 über den Öffnerkontakt 80 und den geschlossenen Schließerkontakt 22 des Tastschalters 12 mit positiver Betriebsspannung verbunden.

Nachdem die Relais 36, 38 angezogen haben, gehen diese über ihre jeweiligen Schließerkontakte 54, 56 und 86, 70 in Selbsthaltung. Wird während dieser Betriebsphase ein Tastschalter 10, 12 nicht mehr betätigt, hat dies eine Unterbrechung der Selbsthaltephase der Relais 36, 38 zur Folge, so dass beide Relais 36, 38 sofort abfallen.

Die Schaltungsanordnung ist derart ausgelegt, dass jeder Fehler der Tastschalter 10, 12 erkannt werden kann. Bleibt der Öffner 16 des Tastschalters 10 geschlossen, während der Schließer 18 schließt, so würde dies zu einem Auslösen der zwischen den Anschlüssen 26 und 24 angeordneten Sicherung 32 führen. Entsprechendes gilt für den Tastschalter 12. Bleiben die Schließer 18, 22 der Tastschalter 10, 12 geschlossen während die Öffner 16, 20 der Tastschalter 10, 12 schließen, lösen ebenfalls die Sicherungen 32, 82 aus.

Wird der Öffner 16 des Tastschalters 10 oder der Öffner 20 des Tastschalters 12 hochohmig, so werden die Kondensatoren 62, 64 nicht geladen und die Sicherheitsschaltung kann keine Freigabe durchhalten. Auch wenn der Schließer 18 des Tastschalters 10 oder der Schließer 22 des Tastschalters 12 hochohmig wird, ist der Selbsthaltekreis beider Relais 36, 38 unterbrochen und es wird keine Freigabe erzeugt.

Zieht das Relais 36 oder das Relais 38 aufgrund eines internen Defekts nicht an, so wird durch die mechanische Zwangsführung der Relais 36, 38 keine Freigabe erzeugt. Bleiben die Relais 36, 38 mechanisch kleben, so verbleiben die Schaltkontakte im aktiven Zustand. Insbesondere bleiben die Öffner 50, 52 des Relais 38 geöffnet und verhindern ein Laden der Kondensatoren 62, 64. Entsprechend bleiben die Öffner 34, 80 des Relais 36 geöffnet, so dass die Kondensatoren 62, 64 ebenfalls nicht geladen werden können. Eine Ladung der Kondensatoren 62, 64 ist jedoch zwingend erforderlich, um die Relais 36, 38 zu aktivieren.

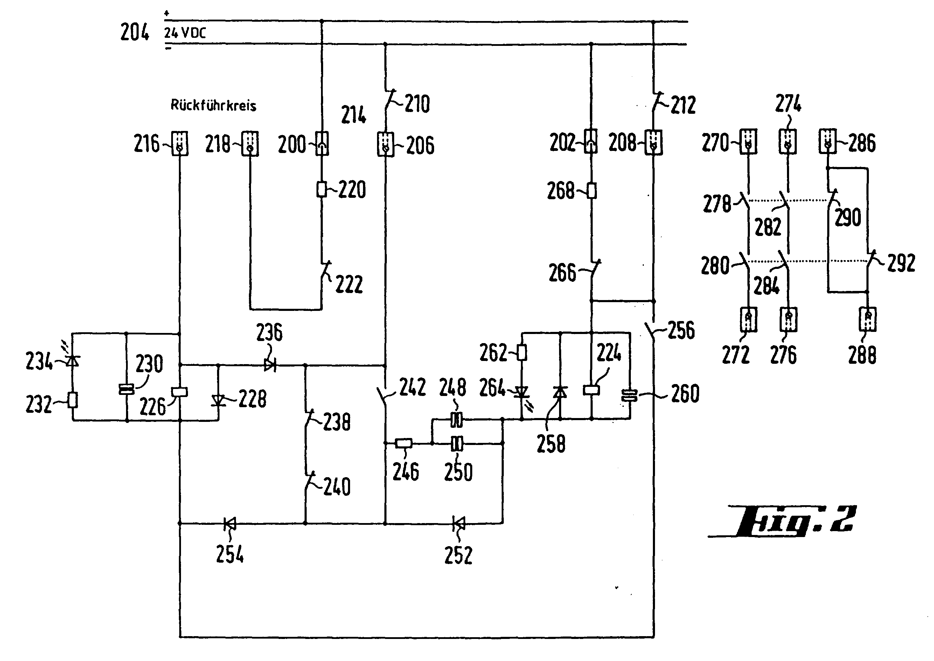

In Fig. 2 ist eine Sicherheitsschaltungsanordnung dargestellt, die wirksam wird, wenn im normalen Steuerungsablauf einer mit elektrischer Energie versorgten Maschine oder Anlage Fehler oder Störungen auftreten, deren Folgen Gefahrenzustände für Mensch und Maschine bedeuten würden.

Die Schaltungsanordnung weist Anschlüsse 200, 202 auf, über die sie mit dem positiven bzw. negativen Pol einer Betriebsspannungsquelle 204 verbunden ist. Die Betriebsspannungsquelle 204 ist insbesondere einer Gleichspannungsquelle von 24 V. Bei der Gleichspannungsquelle 14 kann es sich um ein Netzgerät handeln, das die Netzspannung in zum Beispiel 24 V= umwandelt.

Weitere Anschlüsse 206, 208 der Schaltungsanordnung sind über Öffnerkontakte 210, 212 eines Not-Aus-Tasters 214 mit negativer Betriebsspannung bzw. mit positiver Betriebsspannung verbunden. Zwischen einem Anschluss 216 und einem Anschluss 218 ist extern ein Rückführkreis angeschlossen, der in der Regel durch einen Öffnerkontakt einer Maschinensteuerung (nicht dargestellt) realisiert wird. Zwischen dem Anschluss 200 und dem Anschluss 218 ist eine Reihenschaltung aus Widerstand 220 und Öffnerkontakt 222 eines Relais 224 angeordnet. Der Anschluss 216 ist mit einem negativen Anschluss eines Relais 226 verbunden. Parallel zu dem Relais 226 ist eine Freilaufdiode 228, ein Kondensator 230 und eine Reihenschaltung aus Widerstand 232 und Leuchtdiode 234 angeordnet. Die Freilaufdiode ist mit ihrer Kathode an dem positiven Anschluss des Relais 226 angeschlossen.

Der negative Anschluss des Relais 226 ist über eine Diode 236 mit dem Anschluss 206 verbunden. Dabei liegt die Diode 236 mit ihrer Anode an dem negativen Anschluss des Relais 226. Kathodenseitig ist die Diode 236 mit einer Reihenschaltung aus Diode 237 und Öffnern 238, 240 des Relais 226 verbunden. Die Diode 237 ist anodenseitig mit der Kathode der Diode 236 verbunden. Parallel zu der Reihenschaltung aus Diode 237 und Öffnerkontakten 238, 240 ist ein Schließerkontakt 242 des Relais 224 angeordnet. Der Schließerkontakt 242 verbindet ein R-C-Glied 244, bestehend aus einer Reihenschaltung eines Widerstandes 246 mit einer Parallelschaltung von Kondensatoren 248, 250 mit dem Anschluss 206. Parallel zu dem R-C-Glied ist eine Diode 252 angeordnet, deren Kathode über den Schließerkontakt 242 ebenfalls mit dem Anschluss 206 verbunden ist. Ferner ist die Kathode der Diode 252 mit dem Öffnerkontakt 240 sowie einer Anode einer Diode 254 verbunden. Die Kathode der Diode 254 ist mit dem positiven Anschluss des Relais 226 verbunden.

Der positive Anschluss des Relais 226 ist des Weiteren über einen Schließerkontakt 256 mit dem Anschluss 208 der Schaltungsanordnung verbunden. Ferner ist der Anschluss 208 mit dem positiven Anschluss des Relais 224 verbunden. Ein negativer Anschluss des Relais 224 ist mit dem R-C-Glied 244 sowie mit dem Anodenanschluss der Diode 252 verbunden. Parallel zu dem Relais 224 liegt eine Freilaufdiode 258, ein Kondensator 260 sowie eine Reihenschaltung aus Widerstand 262 und Leuchtdiode 264. Über einen Öffnerkontakt 266 und einen damit in Reihe geschalteten Widerstand 268 liegt der positive Anschluss des Relais 224 an dem Anschluss 202 und damit an negativer Betriebsspannung. Ferner weist die Schaltungsanordnung Anschlüsse 270, 272 und 274, 276 auf, zwischen denen jeweils eine Reihenschaltung von Schließenkontakten 278, 280 bzw. 282, 284 der Relais 224, 226 zur Bildung einre Sicherheitsfreischaltung angeordnet ist. Ferner weist die Schaltungsanordnung Anschlüsse 286, 288 auf, zwischen denen ein Öffnerkontakt 290 des Relais 226 sowie parallel dazu ein Öffnerkontakt 292 des Relais 224 angeordnet ist.

Die oben beschriebene Sicherheitsschaltungsanordnung arbeitet wie folgt:

Nach angelegter Gleichspannung von 24 V= an die Anschlüsse 200 und 202, nicht betätigtem Not-Aus-Taster 214 an den Anschlüssen 206 und 208 sowie bei gebrückten Anschlüssen 216, 218 ist die Schaltungsanordnung betriebsbereit.

Die Schaltungsvariante basiert auf den Überlegungen, die bezüglich der Zweihandschaltung gemäß Fig. 1 angestellt wurden.

Ausgehend von einem Schaltungszustand, bei dem der Not-Aus-Taster/Schalter betätigt, d. h. die Öffnerkontakte 210, 212 geöffnet sind, wird das R-C-Glied 244 über den Widerstand 220, den Öffnerkontakt 222, den Öffnerkontakt des Rückführkreises (nicht dargestellt), die Diode 236, die Öffnerkontakte 238, 240, die Diode 258, den Öffnerkontakt 266 und den Widerstand 268 aufgeladen. In diesem Betriebzustand sind die Relais 224, 226 nicht aktiviert.

Wird nun nach der Aufladephase der Not-Aus-Taster 214 entriegelt, d. h. die Öffnerkontakte 210, 212 geschlossen, was aufgrund der mechansichen Kopplung der Öffnerkontakte gleichzeitig bzw. im wesentlichen gleichzeitig erfolgt, so können sich die Kondensatoren 248, 250 über die Relais 224, 226 sowie die geschlossenen Öffnerkontakte 210, 212 entladen. Dabei liegen die Spulen der Relais 224, 226 bezogen auf das Potential der Kondensatoren 248, 250 an Betriebsspannung, so dass diese in diesem Betriebszustand aktiviert werden. Anschließend gehen die Relais 224, 226 über ihre Schließerkontakte 256, 242 in Selbsthaltung, so dass ein dauerhaftes Anziehen der Relais gewährleistet ist. In diesem Betriebszustand sind die Hauptkontakte 278, 280, 282, 284 geschlossen, so dass ein Hauptstromkreis aktiviert ist.

Wird in diesem Betriebszustand der Not-Aus-Taster 214 betätigt, fallen beide Relais 224, 226 ab, da die Öffnerkontakte 210, 212 in dem Selbsthaltestromkreis der Relais 224, 226 angeordnet sind.

Auch bei dieser Schaltungsvariante wird eine Sicherheitsschaltungsanordnung mit nur zwei Relais realisiert. Bei beiden Ausführungsbeispielen erfolgt die Relaisüberwachung über eigene Öffner bzw. Schließerkontakte 222, 238, 240, 242, 256, 266, so dass keine zusätzlichen Überwachungsrelais benötigt werden.

**Patentansprüche**

1.  Schaltungsanordnung für eine Schutzeinrichtung wie Zweihandschaltung, Not-Aus-Schaltung oder Türverriegelung, mit zumindest einem Kondensator, der in Abhängigkeit der Stellung zumindest eines Schaltelementes entweder zur Aufladung an Betriebsspannung liegt oder zur Abgabe eines Stroms mit zumindest einem Relais in Reihe liegt.
    **dadurch gekennzeichnet,**
    dass ein erster Anschluss des zumindest einen Kondensators einerseits über zumindest ein stromrichtungsabhängiges Bauelement (48, 236) mit einem ersten Pol der Spannungsquelle verbunden und über einen ersten Schaltkontakt (18, 210) des Schaltelementes (10, 12, 214) mit einem zweiten Pol der Spannungsquelle verbindbar ist und andererseits mit einer Reihenschaltung aus einem stromrichtungsabhängigen Bauelement (68, 254) und erstem Relais (38, 226) verbunden ist, wobei ein Anschluss des ersten Relais (38, 226) mit dem ersten Pol der Spannungsquelle verbunden und über den ersten Schaltkontakt (18, 210) des Schaltelementes (10, 12, 214) mit dem zweiten Pol der Spannungsquelle verbindbar ist und dass ein zweiter Anschluss des zumindest einen Kondensators einerseits über ein stromrichtungsabhängiges aktives oder passives Bauelement (72, 258) mit dem zweiten Pol der Spannungsquelle verbunden und über einen zweiten Schaltkontakt (22, 212) mit dem ersten Pol der Spannungsquelle verbindbar ist und dass der zweite Anschluss des zumindest einen Kondensators andererseits mit einem zweiten Relais (36, 224) verbunden ist, wobei ein Anschluss des zweiten Relais (36, 224) mit dem zweiten Pol der Spannungsquelle verbunden und über den zweiten Schaltkontakt (22, 212) des Schaltelementes (10, 12, 214) mit dem ersten Pol der Spannungsquelle verbindbar ist, so dass beim Schließen eines der Schaltkontakte (18, 22; 210, 12) sich der Kondensator (62, 64; 248, 250) über eine Reihenschaltung der Relais (38, 36; 226, 224) entlädt und dass beim gleichzeitigen oder im wesentlichen gleichzeitigen Schließen beider Schaltkontakte (18, 22; 210, 212) die Relais (38, 36; 226, 224) während ihrer Ansprechzeit parallel zum Kondensator und nach dem Anziehen der Relais an Betriebsspannung liegen.

2.  Schaltungsanordnung nach Anspruch 1,
    **dadurch gekennzeichnet,**
    dass in der Ladestrecke des zumindest einen Kondensators (62, 64; 248, 250) Öffnerkontakte der Relais (38, 36, 224, 226) angeordnet sind.

3.  Schaltungsanordnung nach Anspruch 1 oder 2,
    **dadurch gekennzeichnet,**
    dass die Schaltungsanordnung zwei Schaltelemente (10, 12) wie Tastschalter aufweist, dass ein negativer Anschluss des ersten Relais (38) über einen Öffnerkontakt (16) eines ersten Tastschalters (10) mit positiver und über einen Schließerkontakt (18) des ersten Tastschalters (10) mit negativer Bestriebsspannung verbindbar ist und dass ein positiver Anschluss des zweiten Relais (36) über einen Öffnerkontakt (20) eines zweiten Tastschalters (12) mit negativer und über einen Schließerkontakt (22) des zweiten Tastschalters (12) mit positiver Betriebsspannung verbindbar ist.

4.  Schaltungsanordnung nach einem oder mehreren der vorhergehenden Ansprüche,
    **dadurch gekennzeichnet,**
    dass der zumindest eine Kondensator (62, 64; 248, 250) zur Bildung eines R-C-Gliedes (58, 244) in Reihe mit einem Widerstand (60, 246) liegt.

5.  Schaltungsanordnung nach Anspruch 3,

**dadurch gekennzeichnet,**
dass die Selbsthaltekreise der Relais (36, 38) die Schließerkontakte (18, 22) aufweisen.

6. Schaltungsanordnung nach Anspruch 3,
**dadurch gekennzeichnet,**
dass zwischen dem Öffner- (16, 20) und Schließerkontakt (18, 22) der Tastschalter (10, 12) eine Sicherung (32, 82) angeordnet ist.

7. Schaltungsanordung nach Anspruch 1,
**dadurch gekennzeichnet,**
dass der erste Schaltkontakt (210) und der zweite Schaltkontakt (212) eines Not-Aus-Schalters (214) zwei Öffnerkontakte (210, 212) sind, wobei der zumindest eine Kondensator (62, 64, 248, 250) in einem ersten Schaltzustand, bei dem der Not-Aus-Schalter (214) betätigt ist, zur Aufladung an Betriebsspannung liegt und wobei in einem zweiten Schaltzustand, bei dem der Not-Aus-Schalter (214) in Ruhestellung ist, der negative Anschluss des Relais (226) über den ersten Öffnerkontakt (210) mit negativer Betriebsspannung und der positive Anschluss des Relais (224) über den zweiten Öffnerkontakt (212) mit positiver Betriebsspannung verbunden ist.

8. Schaltungsanordnung nach Anspruch 7 oder 8,
**dadurch gekennzeichnet,**
dass die Öffnerkontakte (210, 212) in dem Selbsthaltekreis der Relais (226, 224) angeordnet sind.

9. Schaltungsanordnung nach einem oder mehreren der vorhergehenden Ansprüche,
**dadurch gekennzeichnet,**
dass das stromrichtungsabhängige Bauelement ein passives Bauelement wie Diode ist.

10. Schaltungsanordnung nach einem oder mehreren der vorhergehenden Ansprüche,
**dadurch gekennzeichnet,**
dass das stromrichtungsabhängige Bauelement ein aktives Bauelement wie Transistor ist.

Fig. 1

Fig. 2